# EUROPEAN PATENT SPECIFICATION

(11) **EP 0 372 684 B1**
(45) Date of publication and mention of the grant of the patent: **25.10.1995**
(21) Application number: 89309121.5
(22) Date of filing: 08.09.1989
(51) Int. Cl.: G11B 25/04, G11B 33/08

(54) **Data storage apparatus**
Datenaufzeichnungsgerät
Appareil de mémorisation d'information

(30) Priority: 09.12.1988 US 282475
(43) Date of publication of application: 13.06.1990
(73) Proprietor: SEAGATE TECHNOLOGY INTERNATIONAL, Georgetown, Grand Cayman Island (KY)
(72) Inventor: Forbord, Kent Jon, Roseville Minnesota 55113 (US)
(74) Representative: Sturt, Clifford Mark

(56) References cited:
- EP-A- 0 098 009
- GB-A- 2 187 325
- US-A- 3 886 595
- US-A- 4 657 361

## Description

This invention relates to data storage apparatus, for example disk drive apparatus for the reading and recording of magnetic data.

In one well known type of disk drive apparatus, magnetic data is stored on a plurality of horizontally and concentrically disposed disks, spaced apart from one another on a hub rotatable about a vertical axis. One of the recording surfaces of the disks is devoted to servo or positioning data, with the remaining recording surfaces devoted to working data. A carriage supports a plurality of transducing heads, and is movable for selective positioning of the heads generally radially of the disks. The combined carriage movement and disk rotation enable the selective positioning of each of the heads at any desired location over its associated recording surface. The carriage may be either linear or rotary. In either event, a voice coil motor is provided to control carriage movement and position.

Typically, an actuator for moving the carriage is a rigid member attached directly to a disk drive deck or housing. The carriage/actuator and housing are subjected to vibrations caused by carriage movement, which is high speed and involves frequent reversals in direction, and by spindle rotation, air turbulence and the like. Vibration due to carriage movement causes problems within the drive, particularly at resonant frequencies. For example, a particular frequency (e.g. about 500 Hz) can create resonance and lead to data errors or settle in delays, when switching from a track seeking mode to a track following mode. At a higher frequency of about 2 kHz, resonance can lead to data errors due to mechanical mis-alignment of the working data heads with respect to the servo data heads. As manufacturers of disk drive apparatus continually seek to improve such apparatus by reducing the time for access of the heads to selected data tracks on the disks, the need to overcome the effects of unwanted vibration becomes all the more critical.

A well known expedient for reducing the energy of vibration transmitted through disk drives is the use of resilient materials to absorb vibrational energy.

For example, U.S. Patent No. 4,216,505 discloses a means for damping transducing head vibration in tape drives. In particular, a visco-elastic polymeric layer is mounted between a transducing head shield and a metallic mass, pressing the metallic mass into frictional engagement with the transducing head. Relative displacement between the mass and transducing head is said to dampen vibration.

U.S. Patent No. 4,703,470 discloses dynamic absorbing devices for dissipating undesirable vibrations and resonances in a disk drive apparatus. A visco-elastic link element is disposed between an absorber base and an absorber mass to counter vibrational energy. The absorber mass is mounted directly on the disk drive, for example on the carriage or on the base or housing below the voice coil.

In an application not specifically relating to disk drives, U.S. Patent No. 4,657,361 discloses the mounting of visco-elastic damping material between a mirror and a relatively massive mounting plate that supports the mirror, between a collar extended rearwardly of the mirror and a mounting ring that surrounds the collar, and between a rear surface of the collar and a backing plate. The bolts mounting the mounting plate on the mirror are provided with belleville or spring washers to fix the compressive load on the visco-elastic layer between the plate and mirror.

In connection with disk drive apparatus such as disclosed in US patent number 3886595, on which the preamble of appended claim 1 is based, it has been found that providing a layer of a damping tape or visco-elastic polymer between the actuator and housing substantially eliminates problems due to vibration, at least in the short run. Over time, however, the compressible visco-elastic material undergoes a creeping type or settling deformation, due to bolt torquing or the weight of the relatively massive actuator. Another undesirable result of this deformation is that screws fastening the actuator to the housing, initially tightened to a desired torque, become relatively loose, leading to tilting and ultimately stacking height error in the multiple transducing head arrangement. The low frequency resonance problem noted above becomes more pronounced at this point. The use of belleville washers in connection with the fastening screws has been found beneficial to the extent of maintaining a consistent force upon the elastomeric layer. In spite of the improvement, undesirable creep or deformation occurs when using the belleville washers. An uneven deformation of the elastomer can lead to a slight tilting of the actuator and carriage, again resulting in track following errors.

In accordance with the present invention, there is provided a data storage apparatus including;
a substantially rigid housing having a first substantially planar interface surface, and a plurality of data storage discs mounted within the housing;
a carriage assembly within said housing including a carriage, a plurality of head support arms extended transversely from said carriage toward said discs, and a plurality of data transducing heads, each head supported by a respective one of said arms, and disposed proximate one of the data recording surfaces of an associated one of said discs, said carriage being movable with respect to the housing to move said heads transversely;
a substantially rigid actuator in said housing for controllably moving said carriage to enable a controlled variable positioning of said transducing heads with respect to said discs, said actuator including a spacing plate having a surface for defining a substantially planar second interface surface;
a resilient damping layer between said actuator and said housing and contiguous with said first and second interface surfaces; characterised by
a plurality of substantially rigid spacing members between the actuator and the housing in a length direction substantially perpendicular to said first and second interface surfaces, said spacing members maintaining the position of said actuator with respect to said housing with said first interface surface and second interface surface in parallel and opposed relation to one another and spaced apart in said length direction a selected distance, to substantially prevent movement of said actuator relative to said housing in said length direction, said spacing members being sufficiently flexible to permit a limited displacement of the actuator with respect to the housing in a direction parallel to said first and second interface surfaces and wherein said damping layer undergoes shear strain in response to said limited displacement.

Therefore, the present invention provides means for mounting a carriage and actuator assembly with respect to a rigid housing, to afford substantial vibrational absorption and dissipation without sacrificing the positional integrity of the actuator and carriage. The mounting of the actuator relative to the housing substantially prevents vertical displacement of the actuator relative to the housing, yet provides for limited horizontal displacement generating shear stress and resultant deformation in the resilient damping layer. Such mounting is thus achieved in a manner avoiding long term deformation of the resilient layer.

A preferred embodiment of a disk drive apparatus described below features a substantially rigid housing having a first interface surface. A plurality of data storage disks having data recording surfaces are mounted within the housing to rotate about a common longitudinal axis. A carriage assembly within the housing includes a carriage, a plurality of head support arms extending transversely of the carriage towards the disks, and a plurality of data transducing heads. Each head is supported with respect to one of the arms and is located adjacent to an associated data recording surface of one of the disks. The carriage is movable for moving the heads transversely with respect to the housing. A substantially rigid actuator in the housing selectively moves the carrier to enable controlled positioning of the transducing heads with respect to the disks. The actuator includes means defining a substantially planar second interface surface. Fastening means secure the actuator with respect to the housing with the first interface surface and the second interface surface in parallel and opposed relation to one another but spaced apart by a selected longitudinal distance. The fastening means prevent movement of the actuator longitudinally of the housing, but are sufficiently flexible to permit a limited transverse displacement of the actuator with respect to the housing. A resilient damping layer is positioned between the actuator and the housing and is contiguous with the first and the second interface surfaces.

Preferably, the fastening arrangement features a registration surface of the actuator, and a plurality of substantially rigid spacing members integral with and projecting longitudinally from the housing towards the actuator. A plurality of fasteners, which can be externally threaded, maintain the spacing members in surface engagement with the registration surface, for example by insertion into internally threaded openings provided in the spacing members. A preferred form of spacing member is a right circular cylinder having an end surface in engagement with the registration surface of the actuator.

Advantageously, an annular cut out is formed in the housing at the base of each spacing member, to avoid stress concentrations and effectively to increase the length of each spacing member. Consequently, the spacing members, while substantially rigid in the vertical direction, are sufficiently flexible to allow the desired limited horizontal displacement of the actuator relative to the housing.

Conveniently, the actuator includes a substantially planar damping plate of uniform thickness removably secured thereto to provide the second interface surface. This avoids the need for positioning the resilient layer directly against the body of the actuator, and thereby facilitates removal of the actuator from the remainder of the drive from time to time, for example for re-working, without disturbing or risking damage to the resilient layer.

The preferred resilient layer is a visco-elastic polymer deformable in shear by the transverse displacement of the actuator with respect to the housing. The shear deformation leads to strain amplitudes, resulting in effective energy dissipation and thus efficient damping.

The spacing members serve positively to determine the vertical position of the actuator with respect to the housing. Because they bear substantially the entire weight of the actuator, the spacing members preserve the elastomeric layer against excessive compression from the weight of the actuator and carriage assembly. Moreover, the length of the spacing members can be selected with respect to the somewhat greater thickness of the elastomeric layer, thus to provide for a controlled amount of elastomeric layer compression in the vertical direction. The preferred amount of compression is slight, for example of the order of 5% to 7%, to preserve the capability of the elastomeric layer to dampen vibration through shear deformation. The spacing members, by virtue of their construction and direct interface with the actuator, positively prevent any tilting of the actuator and carriage assembly. Thus, the positional integrity of the carriage and actuator are maintained, yet with substantial damping of vibrational energy generated by movement of the carriage.

The invention is described further, by way of example, with reference to the accompanying drawings, in which:-
Figure 1 is a schematic side elevation of a disk drive apparatus constructed in accordance with the present invention;
Figure 2 is a more detailed perspective view of a housing of the disk drive apparatus of Figure 1;
Figure 3 is a top plan view of a carriage/actuator assembly of the disk drive apparatus of Figure 1;
Figure 4 is a perspective view of a damping plate utilised in mounting the carriage/actuator assembly in accordance with the present invention;
Figure 5 is a top plan view of a damping layer corresponding to the damping plate of Figure 4; and
Figure 6 is a sectional elevation illustrating the assembly of the actuator, damping plate and housing.

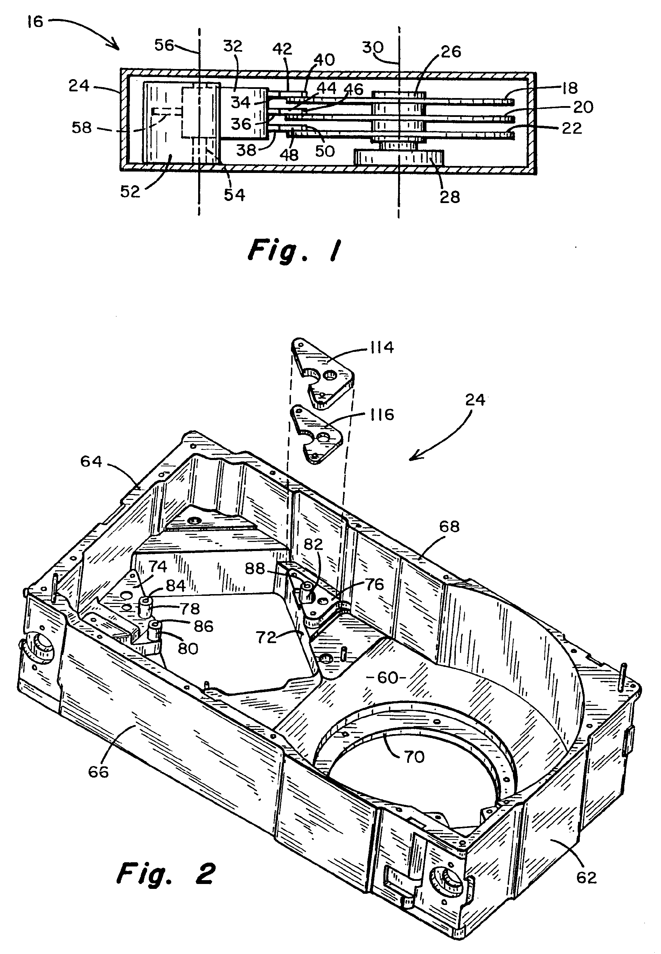

There is shown in Figure 1 a magnetic disk drive apparatus 16 suited for storage and retrieval of magnetic data on a plurality of disks 18, 20 and 22 within a rigid cast aluminium deck or housing 24 of the apparatus. The disks are mounted in concentric stacked and spaced apart relation, with magnetic recording surfaces of the disks oriented horizontally. The disks are integral with a central hub 26, and therefore rotate with the hub 26 as it is driven by a motor 28 to rotate about a vertical drive axis 30.

Also contained within the housing 24 is a carriage/ actuator assembly including a substantially rigid carriage 32. Transducing head support arms 34, 36 and 38 extend horizontally of the carriage and are aligned with one another. At its free end remote from the carriage 32, the arm 34 supports a transducing head 40 through a suspension 42, which can include a flexure and gimballing means as is well known in the art. The arm 36 similarly supports a suspension 44 and a head 46, with the arm 38 likewise supporting a suspension 48 and a head 50. Each arm supports its associated transducing head in relation to the data recording surface of the associated one of the disks 18 to 22. Each transducing head may contact its associated recording surface. Alternatively, and typically in this type of drive, rotation of the disks creates an air foil between each disk and its associated transducing head to suspend the head a slight distance from the surface.

An actuator or voice coil 52 is mounted within the housing for controlling the movement of the carriage 32, thereby to control the position of the transducing heads with respect to the disks. More particularly, the actuator 52 is a rigid member fixedly mounted with respect to the housing 24. A vertical shaft 54 of the carriage, journalled to rotate with respect to the actuator 52, permits rotation of the carriage 32 with respect to the actuator and drive housing about a vertical carriage axis 56. To drive and selectively position the carriage 32, the actuator 52 includes a wire coil or winding which is subjected to an electrical current, in a known manner, to move a coil 58 mounted on the carriage.

It is recognised that the rotary carriage just described is known in the art. As an alternative, a linearly actuated carriage assembly can appropriately be employed with the mounting of the present invention. In either event, the carriage is movable to selectively position the transducing heads, generally radially of the disks, so that in combination with rotation of the disks, the carriage 32 can be moved to selectively locate any of the transducing heads adjacent a selected or desired location on its associated recording surface.

The transducing heads 40 and 50 read and record working data on their associated recording surfaces. The transducing head 46, conversely, is a servo or positioning transducer, which is used to position a designated one of the heads 40 and 50 in accordance with servo data recorded on the disk 20. The technique of dedicating a particular disk of recording surface to positioning information is well known, with a single surface bearing positioning information being used in conjunction with multiple data recording surfaces. Also, while not illustrated, disks frequently are suited for recording data on the bottom surface as well as the top surface, in which event each of the arms 34 to 38 supports two transducing heads rather than one.

Figure 2 shows the housing 24, with remaining components of the drive being removed to enhance illustration of the housing. The housing includes a floor or base 60, and four upright walls including a forward wall 62, a rearward wall 64, and two side walls 66 and 68. A large circular opening is provided through the base 60 at the forward part of the housing, to accommodate the disks and the motor 28. A rectangular depression 72 through the rearward portion of the deck is positioned just below the actuator. The base 60 is formed to provide two flat and horizontal landings 74 and 76 on opposite sides of the depression 72. Two cylindrical posts or columns 78 and 80 are integral with and project upwardly from the base 60 to a point above the landing 74. Likewise, a cylindrical post 82 projects upwardly of the base beyond the landing 76 on the opposite side of the depression 72. Horizontal top edge surfaces 84, 86 and 88 of the respective posts together define a horizontal plane spaced apart from a plane formed by the landings 74 and 76.

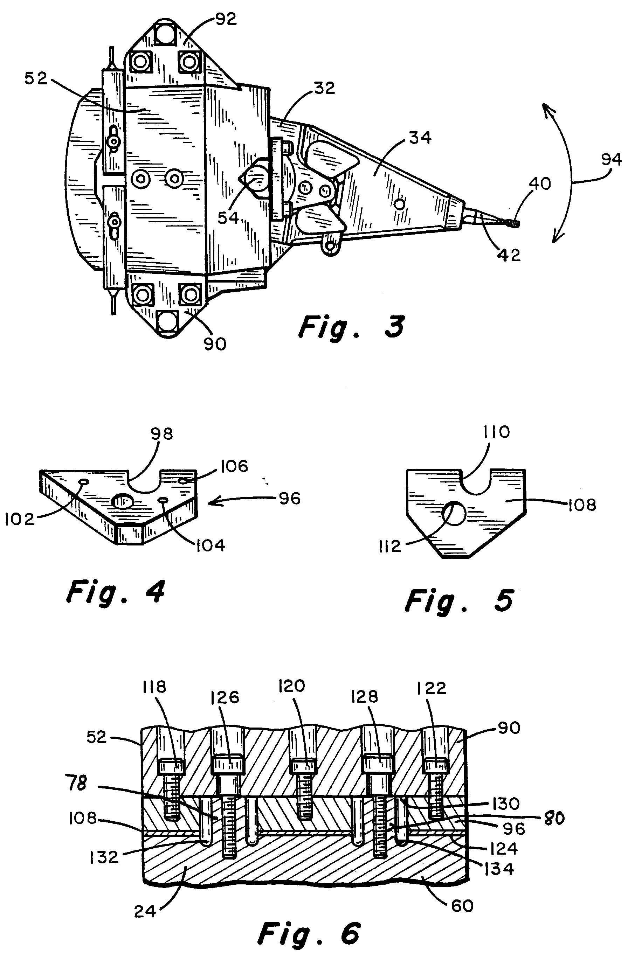

As seen from Figure 3, the actuator 52 includes opposed side flange portions 90 and 92 having a shape generally corresponding to that of the landings 74 and 76, respectively. The side flange portions 90 and 92 are relatively massive, rigid and integral with the remainder of the actuator. In response to the actuator 52, the carriage 32 travels arcuately as indicated by the arrow 94 to achieve the desired positioning of the heads 40, 46 and 50 radially of their associated disks.

The flange portions 90 and 92 are not seated directly upon the landing 74 and 76, but rather are mounted over two respective spacing plates. One of the spacing plates 96, shown in Figure 4, corresponds to the landing 74, and has a generally triangular shape to facilitate its insertion upon the landing. The plate 96 like the housing 24 is preferably constructed of aluminium or other metal, and is formed with a notch 98 to accommodate the post 78. Three small internally threaded openings 102, 104 and 106 are provided for fastening the plate 96 to the flange portion 90 of the actuator as explained later.

The spacing plate 96 is mounted upon the landing 74 through a resilient polymeric damping layer 108 shown in Figure 5. The layer 108 is preferably a thin film or web of a visco-elastic polymer, with a shape corresponding to that of the plate 96 including a notch 110 and an opening 112. A preferred material for the damping layer 108 is identified as SJ2015 type 110 visco-elastic polymer, available under the brand name Scotch damp from the 3M Company of St. Paul, Minnesota. The layer 108 has a thickness of 0.38 mm (0.015 inch), although the preferred thickness does vary with the particular application. The layer 108 is a tape, somewhat "tacky" or pressure sensitive on both sides, to enable its adhesion to the bottom surface of the plate 96 and to the landing 74 upon its positioning between these opposed surfaces.

As seen from Figure 2, a corresponding plate 114 and damping layer 116 are provided for mounting on the landing 76.

Figure 6 illustrates the manner in which the actuator 52, specifically at the flange portion 90, is mounted with respect to the housing 24. Threaded fasteners 118, 120 and 122 secure the plate 96 integrally against the bottom of the flange portion 90 of the actuator. The bottom surface 124 of the plate 96 is thus integral with the actuator.

Screws 126 and 128 secure the actuator flange portion 90 integrally with respect to the base 60. More particularly, a bottom surface 130 of the flange portion 90 abuts the top edge surfaces 84 and 86 of the posts 78 and 80. Thus, the extent to which the posts project upwardly of the remainder of the base 60 determines the spacing between the actuator bottom and the base. Further, in co-operation with the thickness (vertical dimension) of the plate 96, these posts determine the vertical spacing between the horizontal bottom surface 124 of the plate 96 and the landing 74. It is to be understood that the post 82 on the opposite side of the drive is secured to the flange portion 92 of the actuator in a similar manner, and co-operates with the posts 78 and 80 to fix the vertical location of the actuator with respect to the housing, in particular the floor or base.

Thus, the plate bottom surface 124 and the landing 74 provide parallel and opposed interfacing surfaces, with the visco-elastic polymer layer 108 occupying the space between the interfacing surfaces and contiguous with both surfaces. To ensure that the layer 108 contacts both of the surfaces 124 and 74, it is advantageous to select a nominal or unstressed thickness for the layer 108 which exceeds the vertical separation between the interfacing surfaces. In this particular embodiment, a thickness of 0.38 mm (0.015 inch), in combination with a vertical separation of 0.36 mm (0.014 inch) between the interfacing surfaces has been found satisfactory.

Moreover, the thickness of the polymer layer 108 is selected in accordance with two contravening concerns. First, the thickness should be sufficient to accommodate compression as described above, with the amount of compression being a small fraction of the nominal, unstressed thickness, for example, about 6% as in the above example. Conversely, the ability of the polymer layer 108 to absorb vibrational energy is enhanced as the amount of strain due to shear increases. For a given horizontal displacement of the actuator with respect to the deck, the strain component decreases as the thickness of the layer is increased. In short, performance criteria and tolerance levels determine the thickness of the polymer layer for a specific application.

The posts 78, 80 and 82 are likewise designed to suit specific applications. In particular, the height and diameter of the cylindrical posts are selected to provide a resonant frequency which is intermediate or non-harmonic with respect to the resonant frequencies of the actuator and the housing. For example, in the present embodiment, resonant frequencies occur at about 500 Hz, 1 kHz and 2 kHz. Accordingly, the posts 78, 80 and 82 are dimensioned (height of about 12.7 mm (half inch) and diameter of about 9.53 mm (three eighths inch)) to yield a frequency of about 800 Hz.

As indicated at 132 and 134, an annular cut out is formed in the base 60 at the base of the posts 78 and 80. The rounded surfaces of the cut outs avoid stress concentrations, and further effectively increase the length of the posts, for reasons to be explained.

In practice, the actuator/carriage assembly is assembled on the base 60 first by applying the polymeric layer 108 to the bottom surface 124 of the plate 96. The polymeric layer 116 is similarly fastened to its associated plate 114. The plates 96 and 114 are then fastened to the housing, specifically at the landings 74 and 76, respectively, to position the layers 108 and 116 in contact with the landings 74 and 76, respectively. If desired, a primer can be applied to the plates and landings prior to applying the damping layers. The actuator is then placed into the drive and the threaded fastenings 126, 128 and their counterparts (not illustrated) are fastened into the base 60, securing each of the top edge surfaces 84, 86 and 88 against the horizontal bottom surface of the actuator, which acts as a registration surface to precisely, vertically position the actuator relative to the base. This fastening step also positions the bottom surfaces of the plates 96 and 114 the requisite 0.36 mm (0.014 inch) above the landings 76 and 74, which slightly compresses the polymeric layers 108 and 116 to ensure their intimate contact with both interfacing surfaces. Heat curing is used to ensure proper adhesion.

As the carriage 32 is rotated during use of the disk drive apparatus, it translates motion components, and vibrationally excites the actuator 52, which causes a slight, temporary horizontal displacement of the actuator 52 with respect to the base 60, due to the configuration of the posts 78, 80 and 82. More particularly, the length of each of these posts is greater than the diameter. This, together with the metallic construction and presence of internally threaded openings in the posts to accommodate the corresponding threaded fasteners, provides a connection to the actuator which yields slightly in horizontal directions although it is rigid vertically. The visco-elastic layer 108, contiguous with and adhering to the interfacing surfaces of the plate 96 and the base 60, is subjected to strain in shear as a result of this horizontal displacement. It is the shearing of this layer and similarly of the layer 116 which substantially dissipates the energy of vibration, thus reducing amplitudes of resonant frequency problems identified at about 500 Hz and 2 kHz. Thus, in accordance with the present invention, the actuator/carriage assembly is mounted in a vertically fixed manner, which permits substantial dissipation of vibrational energy to eliminate seeking errors and data errors, thereby resulting in more rapid data access times.

## Claims

1. A data storage apparatus including:
a substantially rigid housing (24) having a first substantially planar interface surface (74), and a plurality of data storage discs (18, 20, 22) mounted within the housing;
a carriage assembly (32 to 50) within said housing including a carriage, a plurality of head support arms (34, 36, 38) extended transversely from said carriage toward said discs, and a plurality of data transducing heads (40, 46, 50), each head supported by a respective one of said arms, and disposed proximate one of the data recording surfaces of an associated one of said discs, said carriage being movable with respect to the housing to move said heads transversely;
a substantially rigid actuator (52) in said housing for controllably moving said carriage to enable a controlled variable positioning of said transducing heads with respect to said discs, said actuator including a spacing plate (96) having a surface for defining a substantially planar second interface surface (124);
a resilient damping layer (108) between said actuator and said housing and contiguous with said first and second interface surfaces; characterised by
a plurality of substantially rigid spacing members (78, 80) between the actuator and the housing in a length direction substantially perpendicular to said first and second interface surfaces, said spacing members maintaining the position of said actuator with respect to said housing with said first interface surface and second interface surface in parallel and opposed relation to one another and spaced apart in said length direction a selected distance, to substantially prevent movement of said actuator relative to said housing in said length direction, said spacing members being sufficiently flexible to permit a limited displacement of the actuator with respect to the housing in a direction parallel to said first and second interface surfaces and wherein said damping layer undergoes shear strain in response to said limited displacement.

2. A data storage apparatus according to claim 1 in which a plurality of externally threaded fasteners are provided for mounting the spacing members integrally with said actuator, and in that the spacing members are internally threaded for receiving the fasteners.

3. A data storage apparatus according to claims 1 or 2, in which each of the spacing members has a substantially planar end surface in engagement with a registration surface of said actuator.

4. A data storage apparatus according to claims 1, 2 or 3, in which each of the spacing members comprises a cylindrical post having a height exceeding its diameter.

5. A data storage apparatus according to any of claims 1 to 4, in which a respective circular cut out (132, 134) is provided in the housing around a base of each of the spacing members, thereby effectively increasing the length of each spacing member.

6. A data storage apparatus according to any preceding claim, in which the resilient damping layer is maintained in slight elastic compression.

7. A data storage apparatus according to any preceding claim in which the resilient damping layer comprises a visco-elastic polymer.

8. A data storage apparatus according to any preceding claim in which the resilient damping layer is secured to the interface surfaces by adhesive.

## Patentansprüche

1. Datenspeichervorrichtung mit:
- einem im wesentlichen starren Gehäuse (24), das eine erste im wesentlichen ebene Grenzflächenoberfläche (74) und eine Vielzahl von Datenspeicherplatten (18,20,22) aufweist, die in dem Gehäuse befestigt sind,
- einer Schlittenbaugruppe (32-50) in dem Gehäuse, die einen Schlitten, eine Vielzahl von Kopftragarmen (34,36,38), die sich in Querrichtung von dem Schlitten in Richtung auf die Datenspeicherplatten erstrecken, und eine Vielzahl von Datenwandlerköpfen (40,46,50) einschließt, wobei jeder Kopf von einem jeweiligen der Arme gehaltert ist und in der Nähe einer der Datenaufzeichnungsoberflächen einer zugehörigen der Datenspeicherplatten angeordnet ist, und wobei der Schlitten gegenüber dem Gehäuse beweglich ist, um die Köpfe in Querrichtung zu bewegen,
- einem im wesentlichen starres Stellglied (52) in dem Gehäuse zur steuerbaren Bewegung des Schlittens, um eine gesteuerte veränderliche Positionierung der Wandlerköpfe gegenüber den Datenspeicherplatten zu ermöglichen, wobei das Stellglied eine Abstandsplatte (96) einschließt, die eine Oberfläche zur Festlegung einer im wesentlichen ebenen zweiten Grenzflächenoberfläche (124) aufweist,
- einer elastische Dämpfungsschicht (108) zwischen dem Stellglied und dem Gehäuse und angrenzend an die ersten und zweiten Grenzflächenoberflächen,
dadurch gekennzeichnet, daß eine Vielzahl von im wesentlichen starren Abstandselementen (78,80) zwischen dem Stellglied und dem Gehäuse in einer Längenrichtung im wesentlichen senkrecht zu den ersten und zweiten Grenzflächenoberflächen vorgesehen ist, wobei die Abstandselemente die Position des Stellgliedes gegenüber dem Gehäuse aufrechterhalten, wobei die erste Grenzflächenoberfläche und die zweite Grenzflächenoberfläche parallel und gegenüberliegend zueinander angeordnet sind und in der Längenrichtung in einem ausgewählten Abstand voneinander gehalten werden, um im wesentlichen eine Bewegung des Stellgliedes gegenüber dem Gehäuse in der Längenrichtung zu verhindern, wobei die Abstandselemente ausreichend flexibel sind, um eine begrenzte Bewegung des Stellgliedes gegenüber dem Gehäuse in einer Richtung parallel zu den ersten und zweiten Grenzflächenoberflächen zu ermöglichen, und wobei die Dämpfungsschicht einer Scherbeanspruchung bei dieser begrenzten Bewegung unterworfen wird.

2. Datenspeichervorrichtung nach Anspruch 1,
bei der eine Vielzahl von mit Außengewinde versehenen Befestigungsmitteln zur Befestigung der Abstandselemente einstückig mit dem Stellglied vorgesehen ist, und bei dem die Abstandselemente Innengewinde zur Aufnahme der Befestigungsmittel aufweisen.

3. Datenspeichervorrichtung nach Anspruch 1 oder 2,
bei der jedes Abstandselement eine im wesentlichen ebene Endoberfläche aufweist, die mit einer Ausrichtoberfläche des Stellgliedes in Eingriff steht.

4. Datenspeichervorrichtung nach Anspruch 1, 2 oder 3,
bei der jedes der Abstandselemente einen zylindrischen Pfosten mit einer Höhe umfaßt, die seinen Durchmesser übersteigt.

5. Datenspeichervorrichtung nach einem der Ansprüche 1-4,
bei der ein jeweiliger kreisförmiger Ausschnitt (132,134) in dem Gehäuse um eine Basis jedes der Abstandselemente herum angeordnet ist, wodurch effektiv die Länge jedes Abstandselementes vergrößert wird.

6. Datenspeichervorrichtung nach einem der vorhergehenden Ansprüche,
bei der die elastische Dämpfungsschicht unter geringfügiger elastischer Kompression gehalten wird.

7. Datenspeichervorrichtung nach einem der vorhergehenden Ansprüche,
bei der die elastische Dämpfungsschicht durch ein viskoelastisches Polymermaterial gebildet ist.

8. Datenspeichervorrichtung nach einem der vorhergehenden Ansprüche,
bei dem die elastische Dämpfungsschicht an den Grenzflächenoberflächen durch ein Klebemittel befestigt ist.

## Revendications

1. Appareil de mémorisation de données comprenant :
un boîtier sensiblement rigidement (24) présentant une première surface d'interface sensiblement planaire, et une pluralité de disques de mémorisation des données (18, 20, 22) montés à l'intérieur du boîtier ;
un ensemble à chariot (32 à 50) à l'intérieur dudit boîtier, comprenant un chariot, une pluralité de bras supports de têtes (34, 36, 38), orientés dans une direction transversale par rapport audit chariot en direction desdits disques, et une pluralité de têtes de lecture/écriture des données (40, 46, 50), chaque tête étant supportée par un desdits bras correspondant, et disposée à proximité de l'une des surfaces d'enregistrement des données de l'un desdits disques associés, ledit chariot étant mobile par rapport au boîtier de manière à déplacer lesdites têtes transversalement ;
un actionneur sensiblement rigide (52) dans ledit boîtier pour déplacer, de manière commandée, ledit chariot, et permettre un positionnement variable commandé desdites têtes de lecture/écriture par rapport auxdits disques, ledit actionneur comprenant une plaque d'écartement (96) ayant une surface destinée à définir une seconde surface d'interface (124) sensiblement plane ;
une couche élastique d'amortissement (108) entre ledit actionneur et ledit boîtier, et contiguë avec lesdites première et seconde surfaces d'interface ; caractérisé par une pluralité d'éléments d'écartement sensiblement rigides (78, 80) entre l'actionneur et le boîtier, dans une direction longitudinale sensiblement perpendiculaire auxdites première et seconde surfaces d'interface, lesdits éléments d'écartement maintenant la position dudit actionneur par rapport audit boîtier avec lesdites première et seconde surfaces d'interface en position parallèle et face à face, et écartées dans ladite direction longitudinale d'une distance choisie, afin d'empêcher sensiblement un mouvement dudit actionneur par rapport audit boîtier dans ladite direction longitudinale, lesdits éléments d'écartement étant suffisamment souples pour tolérer un déplacement limité de l'actionneur par rapport au boîtier, dans une direction parallèle auxdites première et seconde surfaces d'interface, et dans lequel ladite couche d'amortissement subit une contrainte de cisaillement en réponse audit déplacement limité.

2. Appareil de mémorisation de données selon la revendication 1, dans lequel une pluralité de fixations filetées extérieurement sont prévues pour monter les éléments d'écartement en une pièce avec ledit actionneur, et dans lequel les éléments d'écartement sont filetés intérieurement pour recevoir les fixations.

3. Appareil de mémorisation de données selon l'une quelconque des revendications 1 ou 2, dans lequel chacun des éléments d'écartement présente une surface d'extrémité sensiblement plane, en prise avec une surface d'alignement dudit actionneur.

4. Appareil de mémorisation de données selon la revendication 1, 2 ou 3, dans lequel chacun des éléments d'écartement est constitué par une colonnette cylindrique ayant une hauteur dépassant son diamètre.

5. Appareil de mémorisation de données selon l'une quelconque des revendications 1 à 4, dans lequel une découpe circulaire correspondante (132, 134) est formée dans le boîtier autour d'une base de chacun des éléments d'écartement, de façon à augmenter effectivement la longueur de chaque élément d'écartement.

6. Appareil de mémorisation de données selon l'une quelconque des revendications précédentes, dans lequel la couche élastique d'amortissement est maintenue sous une légère compression élastique.

7. Appareil de mémorisation de données selon l'une quelconque des revendications précédentes, dans lequel la couche élastique d'amortissement est constituée par un polymère viscoélastique.

8. Appareil de mémorisation des données selon l'une quelconque des revendications précédentes, dans lequel la couche élastique d'amortissement est fixée aux surfaces d'interface par un adhésif.
